# FASCICULE DE BREVET EUROPEEN

(11) **EP 0 604 275 B1**
(45) Date de publication et mention de la délivrance du brevet: **08.04.1998**
(21) Numéro de dépôt: 93403054.5
(22) Date de dépôt: 16.12.1993
(51) Int. Cl.: G01K 1/10

(54) **Procédé et dispositif pour la protection d'instruments de mesure dans une atmosphère corrosive chaude**
Verfahren und Vorrichtung zum Schützen eines Messinstrumentes in einer heissen, korrosiven Atmosphäre
Procedure and device for the protection of measuring instruments in a hot, corrosure atmosphere

(30) Priorité: 21.12.1992 FR 9215333
(43) Date de publication de la demande: 29.06.1994
(73) Titulaire: TOTAL RAFFINAGE DISTRIBUTION S.A., 92800 Puteaux (FR)
(72) Inventeur: Wirtz, Robert, F-59710 Grande Synthe (FR)
(74) Mandataire: Jolly, Jean-Pierre

(56) Documents cités:
- EP-A- 0 356 593
- DE-A- 2 321 768
- DE-A- 3 032 754
- US-A- 4 023 411
- US-A- 4 747 883
- PATENT ABSTRACTS OF JAPAN vol. 7, no. 105 (P-195)7 Mai 1983 & JP-A-58 027 030 (BABCOCK HITACHI KK) 17 Février 1983

## Description

La présente invention concerne un procédé de protection d'instruments de mesure, dans une atmosphère corrosive et/ou chaude. L'invention concerne également les dispositifs utilisés pour la mise en oeuvre de ce procédé. L'invention concerne enfin des applications de ce procédé et de ce dispositif.

Dans la suite de la présente description, on se réfèrera plus spécifiquement à la protection d'instruments de mesure de température employés dans une atmosphère corrosive et chaude, mais il apparaîtra clairement que l'invention s'applique à la protection de tout autre type d'instrument de mesure, qu'il soit utilisé dans une atmosphère chaude et/ou dans une atmosphère corrosive.

Ces atmosphères chaudes et corrosives se rencontrent en particulier dans les fours industriels du type fours de raffineries, fours d'unités chimiques ou pétrochimiques, ou fours de toute autre nature, tels que ceux des cimentiers ou des cokiers, qui utilisent comme moyen de chauffe la combustion de produits carbonés ou hydrocarbonés tels que le charbon, les fiouls et les résidus atmosphèriques à hautes teneurs en soufre et en métaux, et dont les oxydes sont très fortement corrosifs à l'égard de métaux ou alliages, à fortes températures.

Pour réchauffer, notamment, des fluides liquides d'un certain gradient de température, on emploie des fours à faisceaux de tubes, comprenant plusieurs sections, équipées de brûleurs et correspondant à des circuits parallèles de réchauffage du fluide, qui circule dans ces tubes. Le fluide est chauffé par transfert de chaleur à travers la paroi de ces tubes, celle-ci étant elle-même chauffée par les gaz de combustion et même parfois directement par la flamme, si le tube est à proximité immédiate de celle-ci. Les exploitants de ce type de four ont comme contraintes d'homogénéiser la température de sortie du fluide à la sortie de toutes les sections, de façon à obtenir la température correcte et nécessaire aux traitements ultérieurs du fluide, et de contrôler la température des gaz de combustion s'échappant à la tête du four.

Deux types de températures sont généralement suivis par l'exploitant : les températures de peau des tubes contenus dans le four, à l'entrée et à la sortie du fluide à réchauffer, et les températures de rayonnement et/ou de fumées des gaz de combustion.

La mesure de la température de peau permet de vérifier que celle-ci n'atteint pas la température critique du métal ou de l'alliage dont sont constitués les tubes et qu'il n'y a pas de point chaud dans ceux-ci, traduisant ou se traduisant par un dépôt provenant du fluide à l'intérieur du tube. Une bonne mesure de la température de peau permet donc de suivre et de régler l'augmentation de température du fluide dans le tube, en jouant sur le débit de ce dernier et sur la quantité de combustible brûlé, et, en conséquence, de diminuer les risques de bouchage des tubes et d'augmenter par conséquent la fiabilité et la sécurité de ces fours.

Pour mesurer en continu la température de peau de ces tubes, on utilise des thermocouples, que l'on soude à l'extérieur des tubes et qui sont reliés à un indicateur de mesure et de commande, extérieur au four.

Les thermocouples usuels utilisés dans cette application se présentent sous la forme de câbles blindés, de faible diamètre, flexibles et robustes. Ils comprennent deux fils métalliques constituant le couple thermoélectrique, une gaine métallique continue, entourant le couple et assurant la protection mécanique et chimique du couple, et, entre la gaine et les fils métalliques, un isolement thermique minéral, en poudre, très fortement comprimé, qui assure à la fois le maintien des fils conducteurs et un bon isolement. Une extrémité des fils et de la gaine sont soudés sur le tube dont on désire connaître la température et, à leur autre extrémité, le thermocouple est relié à un câble de compensation adapté au couple thermoélectrique, par l'intermédiaire d'une tête de raccordement, qui est elle-même reliée à l'indicateur de température, de type galvanomètre ou micromètre électronique.

En contact avec les gaz de combustion et parfois même avec la flamme des brûleurs du four, ces thermocouples ont une durée de vie très limitée, parfois inférieure à un mois, et il faudrait les remplacer trop fréquemment. Outre le coût de ces capteurs, leur remplacement nécessite un arrêt prolongé de l'installation et engendre donc des frais considérables, ce qui est impossible à réaliser au niveau industriel, puisqu'une durée de cycle pour un tel four est d'environ trois ans, et qu'on tend à augmenter cette durée. Cependant, lorsque les thermocouples sont cassés ou donnent des résultats erronés, du fait de l'amincissement de la gaine, l'exploitant n'a plus de moyen de contrôle de la température du fluide, et des incidents risquent de se produire.

En fait, ce ne sont pas tant les fils métalliques formant le couple thermoélectrique qui posent problème au niveau de leur soudure sur le tube, car, refroidie par le fluide à réchauffer qui circule dans le tube, cette soudure résiste généralement bien aux conditions d'environnement auxquelles elle est soumise. En revanche, les défaillances des thermocouples sont dues la plupart du temps à la gaine de protection, qui, hormis son extrémité non soudée sur le tube, est à une température beaucoup plus élevée. A cette température, les gaz de combustion sont très corrosifs et les risques de rupture de la gaine du thermocouple sont très grands.

Des problèmes du même ordre se rencontrent pour les thermocouples destinés à mesurer la température des fumées en sortie des fours. Le couple thermoélectrique est, dans ce cas, logé dans un tube fermé, dit "puits thermométrique", qui fait saillie à partir de l'une des parois du four et est disposé sur le trajet des fumées de combustion. Dans de telles conditions d'utilisation, les puits thermométriques se corrodent très rapidement et doivent être remplacés fréquemment.

Dans le document EP-A-0 356 593 est décrit un appareil de surveillance des températures destiné à un environnement hostile tel qu'un réacteur à haute température. Cet appareil de surveillance des températures comprend un fourreau thermique inséré dans un passage ménagé dans une paroi réfractaire située à côté d'une chambre de combustion, un thermocouple logé dans le fourreau thermique, de telle sorte qu'une paroi du fourreau thermique se situe entre la chambre de combustion et le thermocouple, et des moyens d'alimentation en gaz permettant d'envelopper le thermocouple d'un courant gazeux.

Le document PATENT ABSTRACTS OF JAPAN, vol. 7, n° 105 (P-195) du 7 mai 1983 et JP-A 58 027 030 divulgue un procédé de mesure de la température d'un lit de charbon, dans lequel on utilise un dispositif comprenant un pyromètre optique situé à l'extrémité d'un cylindre contenant une substance conductrice de la lumière. A l'autre extrémité du cylindre est disposée une fenêtre par laquelle la lumière s'introduit dans le cylindre en vue d'une mesure de la température. Un milieu de refroidissement circule de part et d'autre du cylindre pour le refroidir. Un gaz inactif est conduit devant ladite fenêtre et forme un rideau devant cette dernière, de manière à ce que la lumière puisse s'y introduire sans être perturbée par le charbon.

Le document US 4 747 883 concerne un assemblage disposé à l'intérieur d'un trou dans la paroi d'un four contenant du verre fondu. Cet assemblage comprend un thermocouple entouré et entièrement protégé du verre fondu par un fourreau. Un espace est prévu entre le thermocouple et le fourreau. Dans cet espace circule un gaz inhibant la corrosion.

La présente invention vise à remédier aux inconvénients de la technique antérieure.

Un premier but de l'invention et donc d'assurer une protection des instruments de mesure utilisés dans une atmosphère chaude et/ou corrosive.

Un autre but de l'invention est d'accroître la durée de vie des instruments de mesure utilisés dans une telle atmosphère, afin d'améliorer la fiabilité de la mesure et surtout la sécurité d'exploitation de ces fours, et de limiter ainsi la fréquence de remplacement de ces thermocouples et le coût qui en résulte.

A cet effet, l'invention a pour objet un procédé de protection d'un instrument de mesure, dans lequel on loge au moins partiellement l'instrument de mesure dans un fourreau qui est séparé de cet instrument de mesure par un espace annulaire dans lequel on fait circuler un gaz inerte vis-à-vis de l'instrument de mesure, qui, après avoir refroidi l'instrument de mesure et le fourreau est évacué dans une atmosphère chaude et/ou corrosive. Ce procédé se caractérise en ce que :
- l'instrument de mesure opère dans l'atmosphère chaude et/ou corrosive,
- le fourreau a une extrémité libre qui débouche dans l'atmosphère chaude et/ou corrosive,
- le gaz inerte est évacué par cette extrémité libre.

L'invention a également pour objet un dispositif pour la protection d'un instrument de mesure opérant directement dans une atmosphère chaude et/ou corrosive, ce dispositif comportant un fourreau qui entoure au moins partiellement l'instrument de mesure, en étant séparé de lui par un espace annulaire, ce fourreau ayant une extrémité raccordée à un moyen d'alimentation en un gaz inerte vis-à-vis de l'instrument de mesure, de manière à pouvoir faire circuler le gaz inerte contre le fourreau et l'instrument de mesure avant de le rejeter dans l'atmosphère chaude et/ou corrosive. Ce dispositif se caractérise en ce que :
- le fourreau a une extrémité libre qui débouche dans l'atmosphère chaude et/ou corrosive dans laquelle la mesure est effectuée,
- le gaz inerte est évacué par cette extrémité libre.

La présente invention n'a pas seulement pour effet de protéger l'instrument de mesure d'une corrosion par l'atmosphère environnante, mais aussi de diminuer considérablement la vitesse de corrosion du fourreau protecteur, généralement constitué d'acier adapté aux températures ambiantes, par refroidissement interne de celui-ci par le gaz circulant dans la cavité annulaire.

L'instrument de mesure proprement dit, un couple thermoélectrique par exemple, pourra faire saillie dans l'atmosphère corrosive à l'extrémité libre du fourreau, pour effectuer les mesures nécessaires sans être perturbé par le gaz qui circule dans celui-ci. Dans le cas d'un thermocouple destiné à mesurer la température de peau d'un tube dans un four, ce thermocouple pourra ainsi être soudé de façon usuelle sur le tube.

Le gaz circulant dans le fourreau pourra être tout gaz inerte vis-à-vis de l'instrument de mesure. Dans le cas d'un thermocouple destiné à mesurer des températures dans un four, ce gaz pourra être simplement de l'air ou de l'azote.

Le débit de gaz pourra être relativement faible et compris par exemple entre 600 et 2000 litres par heure. Dans le cas de thermocouples utilisés dans des fours à des températures comprises entre 600 et 900°C, la Demanderesse a ainsi établi qu'un débit aussi faible que 1 200 l/h est suffisant pour éviter toute défaillance de l'instrument de mesure, en multipliant sa durée de vie par un facteur de 10.

Dans une telle application, l'espace annulaire séparant la face interne du fourreau de l'instrument de mesure pourra être de l'ordre de 1 mm, ce qui signifie que l'encombrement de l'instrument de mesure n'en sera par majoré de façon significative.

Avantageusement, le fourreau entourant l'instrument de mesure pourra être lui-même revêtu d'une gaine en un matériau thermiquement isolant, par exemple en fibres de céramique, en laine de roche ou autres, pour limiter encore ses risques de corrosion.

On pourra naturellement donner au fourreau, revêtu ou non, toute forme adaptée à celle de l'instrument de mesure à protéger.

Les dessins schématiques annexés illustrent deux applications de l'invention. Sur ces dessins :

La figure 1 illustre la mise en oeuvre de l'invention pour la protection d'un thermocouple utilisé pour mesurer, dans un four, la température de peau d'un tube logé dans ce four et dans lequel circule un fluide à réchauffer.

La figure 2 illustre la mise en oeuvre de l'invention pour la protection d'un thermocouple utilisé, dans un four, pour mesurer la température des fumées en sortie du four.

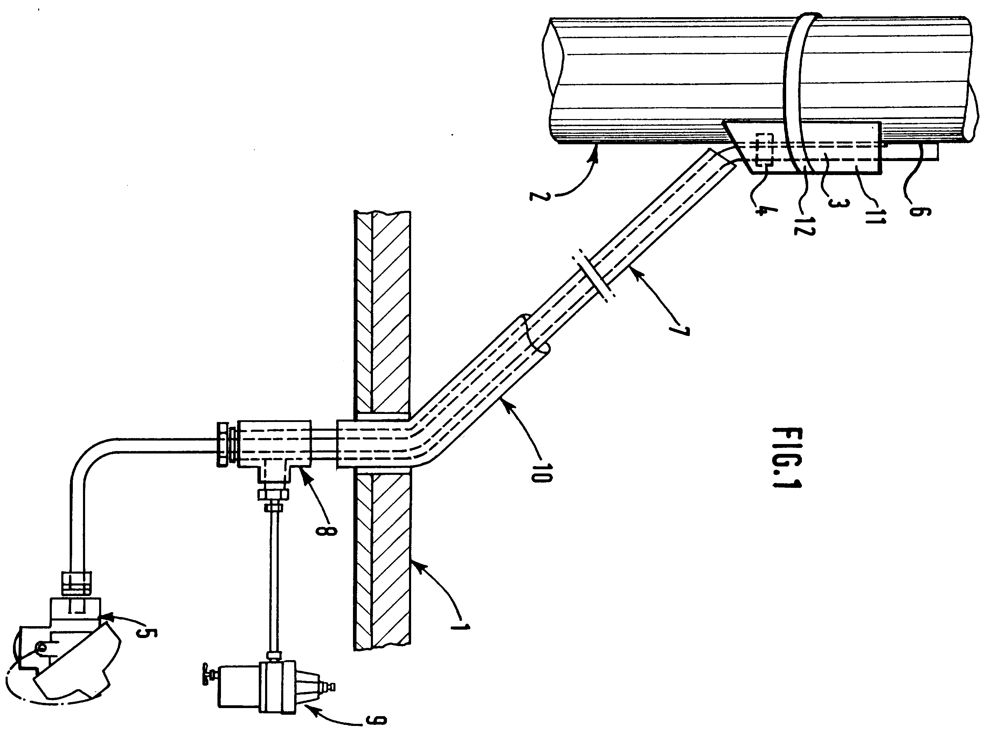

On se réfèrera d'abord à la figure 1, sur laquelle on voit la paroi 1 d'un four, dans lequel sont brûlés des combustibles produisant des gaz à haute température, comprenant des composés corrosifs. Dans ce four sont logés des tubes 2, exposés au rayonnement thermique, aux fumées de la combustion, et même parfois à la flamme, et dans lesquels circule le fluide à réchauffer, qui récupère, par échange thermique, une partie des calories absorbées par le tube.

Ainsi qu'il a été indiqué ci-dessus, il est important de connaître en continu la température de surface ou "température de peau" de ces tubes, afin, notamment, de pouvoir régler le débit du fluide à réchauffer et celui du combustible.

A cet effet, on utilise des thermocouples, dont la gaine 3, fixée par des cavaliers 4 sur les tubes, traverse la paroi 1 et est connectée par un raccord 5 à une centrale de contrôle. L'extrémité de chaque gaine 3 en contact avec le tube 2 et le couple thermoélectrique qui y est logé est soudée en 6 sur le tube 2. Ce sont ces gaines, soumises à une température de plusieurs centaines de degrés C, pouvant atteindre 900°C, qui baignent dans une atmosphère très corrosive, et qui se corrodent et se brisent très rapidement.

Pour remédier à cet inconvénient, conformément à l'invention, on entoure les gaines 3, sur toute leur longueur dans le four, à l'exception de la partie en contact avec le tube 2 associé, par un fourreau 7, en laissant subsister un espace annulaire entre ce fourreau 7 et la gaine 3, et l'on connecte le fourreau 7, à l'extérieur du four, à l'aide d'un raccord en 8, à un détendeur 9 d'une source d'un gaz sous pression, inerte vis-à-vis de la gaine et du fourreau. Ce gaz circulera dans l'espace annulaire séparant le fourreau 7 de la gaine 3 et sera évacué dans l'atmosphère du four, par l'extrémité libre du fourreau, au voisinage immédiat du tube 2.

Comme représenté sur la figure 1, le fourreau 7 peut lui-même être revêtu d'un manchon 10 en un matériau ayant de bonnes qualités d'isolation thermique, par exemple en fibres de céramique ou en laine de roche. On pourra envisager de recouvrir la partie de la gaine du thermocouple maintenue le long du tube par un morceau de manchon 11, de même composition que le fourreau 7 et maintenu par au moins un collier 12 sur le tube. Seule l'extrémité du thermocouple soudée en 6 doit rester découverte.

Le gaz injecté dans le fourreau 7 pourra être tout gaz inerte vis-à-vis de la gaine du thermocouple et compatible avec l'atmosphère de l'enceinte dans laquelle il est rejeté. Dans le cas d'un four, on pourra utiliser de l'air, mais aussi, souvent, de l'azote.

Le gaz sera simplement à la température régnant à l'extérieur du four et, comme il a été indiqué ci-dessus, il pourra être injecté sous un faible débit, qui suffira néanmoins à assurer le refroidissement et la protection de la gaine 3, dont la durée de vie pourra être égale à dix fois celle d'un thermocouple non protégé conformément à l'invention. De même, ce gaz permettra de limiter la vitesse de corrosion du fourreau 7, par refroidissement interne.

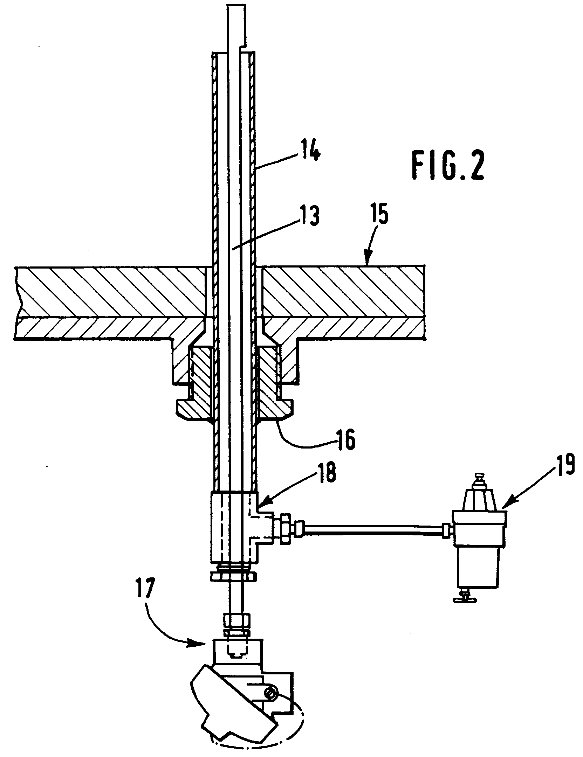

La figure 2 illustre une autre application de l'invention à la protection des dispositifs de mesure de la température des fumées des fours, en particulier au voisinage de l'orifice d'évacuation de ces fumées. On utilise habituellement dans ce but un "puits thermométrique", c'est-à-dire un manchon fermé dans lequel est logé un thermocouple, et l'on rencontre des problèmes analogues à ceux que posent les thermocouples destinés à mesurer la température de peau des tubes.

Pour remédier à cet inconvénient, conformément à la présente invention, on n'utilise plus un puits thermométrique, mais on le remplace par un fourreau 14, dans lequel on loge le thermocouple 13. Ce fourreau 14 traverse une paroi 15 du four et une bague de maintien 16, en laissant subsister un espace annulaire entre la gaine du thermocouple et le fourreau. Comme décrit en relation avec la figure 1, le thermocouple 13 est connecté, par la tête de raccordement 17, au câble de compensation conduisant l'information à l'indicateur de température, non représenté sur la figure, tandis que le fourreau 12 est relié par un raccord en T, 18, à un détendeur ou rotamètre 19 d'une source d'air ou d'azote sous pression.

Comme précédemment, ce gaz circule dans l'espace annulaire séparant le fourreau 14 de la gaine du thermocouple 13, en protégeant celle-ci, et est rejeté dans le four par l'extrémité libre du fourreau. La gaine du thermocouple fait saillie de quelques millimètres en dehors de cette extrémité du fourreau et baigne ainsi dans l'atmosphère du four, dont la température peut donc être mesurée de façon usuelle, mais sans risque de rupture rapide de la gaine du thermocouple ni même du fourreau, comme dans la technique antérieure.

L'invention apporte donc un moyen simple et facile à mettre en oeuvre pour protéger et prolonger la durée de vie d'instruments de mesure appelés à fonctionner à haute température dans une enceinte à atmosphère corrosive. Naturellement, l'invention s'applique à tous les types d'instruments de mesure et n'est pas limitée à des thermocouples destinés à effectuer des mesures de températures dans des fours.

## Revendications

1. Procédé de protection d'un instrument de mesure (3,13), dans lequel on loge au moins partiellement l'instrument de mesure (3,13) dans un fourreau (7,14) qui est séparé de cet instrument de mesure (3,13) par un espace annulaire dans lequel on fait circuler un gaz inerte vis-à-vis de l'instrument de mesure (3,13), qui, après avoir refroidi l'instrument de mesure (3,13) et le fourreau (7,14) est évacué dans une atmosphère chaude et/ou corrosive, ce procédé étant **caractérisé en ce que :**
- l'instrument de mesure (3,13) opère dans l'atmosphère chaude et/ou corrosive,
- le fourreau (7,14) a une extrémité libre qui débouche dans l'atmosphère chaude et/ou corrosive,
- le gaz inerte est évacué par cette extrémité libre.

2. Procédé selon la revendication 1, caractérisé en ce que le gaz inerte est compatible avec l'atmosphère chaude et/ou corrosive.

3. Procédé selon l'une des revendications 1 et 2, caractérisé en ce que le débit du gaz inerte est compris entre 600 et 2000 l/h.

4. Procédé selon l'une des revendications 1 à 3, caractérisé en ce que l'instrument de mesure (3,13) fait saillie en dehors du fourreau (7,14), à l'extrémité de celui-ci par laquelle ledit gaz inerte est rejeté dans l'atmosphère chaude et/ou corrosive.

5. Dispositif pour la protection d'un instrument de mesure (3,13) opérant dans une atmosphère chaude et/ou corrosive, ce dispositif comportant un fourreau (7,14) qui entoure au moins partiellement l'instrument de mesure (3), en étant séparé de lui par un espace annulaire, ce fourreau (7,14) ayant une extrémité raccordée à un moyen d'alimentation (9,18) en un gaz inerte vis-à-vis de l'instrument de mesure (3,13), de manière à pouvoir faire circuler le gaz inerte contre le fourreau (7,14) et l'instrument de mesure (3,13) avant de le rejeter dans l'atmosphère chaude et/ou corrosive, ce dispositif étant **caractérisé en ce que :**
- le fourreau (7,14) a une extrémité libre qui débouche dans l'atmosphère chaude et/ou corrosive dans laquelle la mesure est effectuée,
- le gaz inerte est évacué par cette extrémité libre.

6. Dispositif selon l'une des revendications 4 et 5, caractérisé en ce que le fourreau (7) est lui-même revêtu d'un matériau thermiquement isolant (10), tels que des fibres de céramique ou de la laine de roche.

7. Dispositif selon l'une quelconque des revendications 5 et 6, caractérisé en ce que l'instrument de mesure (3) fait saillie en dehors de l'extrémité du fourreau (7,14) par laquelle le gaz inerte est rejeté dans l'atmosphère où s'effectue la mesure.

8. Dispositif selon l'une des revendications 5 à 7, caractérisé en ce que l'espace annulaire séparant la face interne du fourreau (7,14) de l'instrument de mesure (3,13) est de l'ordre de 1 mm.

9. Dispositif selon l'une des revendications 5 à 8, caractérisé en ce que l'instrument de mesure (3,13) est un instrument de mesure de la température.

10. Dispositif selon la revendication 9, caractérisé en ce que l'instrument de mesure (3,13) est un thermocouple.

11. Utilisation d'un dispositif selon la revendication 9 lorsqu'elle est dépendante de la revendication 7, pour la mesure de la température de peau d'un tube (2) baignant dans l'atmosphère chaude et/ou corrosive.

12. Utilisation selon la revendication 11, dans laquelle un manchon (11), de même composition que le fourreau (7) est maintenu en position sur le tube (2) par un collier (12), une partie de la gaine de l'instrument de mesure (3) est appliquée contre le tube (2) et recouverte par un morceau du manchon (11).

13. Utilisation d'un dispositif selon la revendication 11 ou la revendication 12, dans laquelle l'extrémité du fourreau (7) par laquelle le gaz inerte est rejeté dans l'atmosphère chaude et/ou corrosive est disposée au voisinage immédiat du tube (2).

14. Utilisation d'un dispositif selon la revendication 9 ou la revendication 10 lorsqu'elles sont dépendantes de la revendication 7, pour la mesure des températures des fumées d'un four, dans laquelle le fourreau (14) fait saillie dans le four à partir d'une paroi (15) de celui-ci et l'instrument de mesure (13) fait lui-même saillie sur le trajet des fumées en dehors de l'extrémité du fourreau (14) par laquelle le gaz inerte est rejeté dans le four.

## Patentansprüche

1. Verfahren zum Schutz eines Meßinstruments (3, 13), bei dem das Meßinstrument (3, 13) zumindest teilweise in eine Hülse (7, 14) eingepaßt ist, die vom Meßinstrument (3, 13) durch einen ringförmigen Zwischenraum getrennt ist, in dem ein gegenüber dem Meßinstrument (3, 13) inertes Gas umgewälzt und nach Kühlung des Meßinstruments (3, 13) und der Hülse (7, 14) in eine heiße bzw. korrosive Atmosphäre abgeleitet wird, wobei das Verfahren dadurch gekennzeichnet ist, daß:
- das Meßinstrument (3, 13) in der heißen bzw. Korrosiven Atmosphäre eingesetzt wird;
- die Hülse (7, 14) ein freies Ende besitzt, das in die heiße bzw. korrosive Atmosphäre mündet;
- das Inertgas durch dieses freie Ende abgeleitet wird.

2. Verfahren nach Anspruch 1, dadurch gekennzeichnet, daß das Inertgas mit der heißen bzw. korrosiven Atmosphäre kompatibel ist.

3. Verfahren nach einem der Ansprüche 1 und 2, dadurch gekennzeichnet, daß das Inertgas mit einer Leistung von 600 bis 2.000 l/h zugeführt wird.

4. Verfahren nach einem der Ansprüche 1 bis 3, dadurch gekennzeichnet, daß das Meßinstrument (3, 13) aus der Hülse (7, 14) an deren Ende vorspringt, durch welches das Inertgas in die heiße bzw. korrosive Atmosphäre abgeleitet wird.

5. Vorrichtung zum Schutz eines in einer heißen bzw. korrosiven Atmosphäre eingesetzten Meßinstruments (3, 13), bestehend aus einer Hülse (7, 14), die das Meßinstrument (3) zumindest teilweise umgibt und von diesem durch einen ringförmigen Zwischenraum getrennt ist, wobei ein Ende der Hülse (7, 14) an eine Zufuhrvorrichtung (9, 18) für ein gegenüber dem Meßinstrument (3, 13) inertes Gas angeschlossen ist dergestalt, daß das Intertgas gegen die Hülse (7, 14) und das Meßinstrument (3, 13) umgewälzt werden kann, bevor es in die heiße bzw. korrosive Atmosphäre austritt, wobei die Vorrichtung dadurch gekennzeichnet ist, daß:
- die Hülse (7, 14) ein freies Ende aufweist, das in die heiße bzw. korrosive Atmosphäre mündet, in der die Messung durchgeführt wird;
- das Inertgas durch dieses freie Ende abgeleitet wird.

6. Vorrichtung nach einem der Ansprüche 4 und 5. dadurch gekennzeichnet, daß die Hülse (7) selbst eine Wärmeisolierung (10) beispielsweise aus Keramikfasern oder Steinwolle besitzt.

7. Vorrichtung nach irgendeinem der Ansprüche 5 und 6, dadurch gekennzeichnet, daß das Meßinstrument (3) aus dem Ende der Hülse (7, 14) vorspringt, durch welches das Inertgas in die Atmosphäre abgeleitet wird, in der die Messung erfolgt.

8. Vorrichtung nach einem der Ansprüche 5 bis 7, dadurch gekennzeichnet, daß der ringförmige Zwischenraum, der die In nenfläche der Hülse (7, 14) vom Meßinstrument (3, 13) trennt, eine Größenordnung von 1 mm hat.

9. Vorrichtung nach einem der Ansprüche 5 bis 8, dadurch gekennzeichnet, daß es sich bei dem Meßinstrument (3, 13) um ein Temperaturmeßgerät handelt.

10. Vorrichtung nach Anspruch 9, dadurch gekennzeichnet, daß das Meßinstrument (3, 13) ein Thermoelement ist.

11. Anwendung einer Vorrichtung nach Anspruch 9 in Abhängigkeit von Anspruch 7 zur Messung der Außenhauttemperatur eines Rohres (2), das in die heiße bzw. Korrosive Atmosphäre eingetaucht ist.

12. Anwendung nach Anspruch 11, bei der eine Muffe (11) in gleicher Zusammensetzung wie die Hülse (7) durch eine Schelle (12) auf dem Rohr (2) in ihrer Position gehalten wird, wobei ein Teil der Ummantelung des Meßinstruments (3) gegen das Rohr (2) anliegt und durch ein Stück der Muffe (11) überdeckt ist.

13. Anwendung einer Vorrichtung nach Anspruch 11 oder 12, bei der sich das Ende der Hülse (7), durch welches das Inertgas in die heiße bzw. korrosive Atmosphäre abgeleitet wird, in unmittelbarer Nähe des Rohres (2) befindet.

14. Anwendung einer Vorrichtung nach Anspruch 9 oder Anspruch 10 in Abhängigkeit von Anspruch 7 zur Messung der Rauchgastemperaturen eines Ofens, bei der die Hülse (14) ausgehend von einer Wandung (15) in den Ofen vorspringt und das Meßinstrument (13) selbst in den Strömungsweg der Rauchgase außerhalb des Endes der Hülse (14) vorspringt, durch welches das Inertgas in den Ofen abgeleitet wird.

## Claims

1. A method for protecting a measuring instrument (3, 13), in which the measuring instrument (3, 13) is at least partially accommodated in a sheath (7, 14) which is separated from this measuring instrument (3, 13) by an annular space in which a gas, which is inert with respect to the measuring instrument (3, 13), is caused to circulate, said gas being evacuated into a hot and/or corrosive atmosphere once it has cooled the measuring instrument (3, 13) and the sheath (7, 14), this method being **characterised in that**
- the measuring instrument (3, 13) operates in a hot and/or corrosive atmosphere,
- the sheath (7, 14) has a free end which opens into the hot and/or corrosive atmosphere,
- the inert gas is evacuated via this free end.

2. A method according to claim 1, **characterised in that** the inert gas is compatible with the hot and/or corrosive atmosphere.

3. A method according to either one of claims 1 and 2, characterised in that the flow rate of the inert gas is between 600 and 2000 l/h.

4. A method according to any one of claims 1 to 3, characterised in that the measuring instrument (3, 13) projects beyond the sheath (7, 14), at the end thereof via which said inert gas is ejected into the hot and/or corrosive atmosphere.

5. A device for the protection of a measuring instrument (3, 13) operating in a hot and/or corrosive atmosphere, this device comprising a sheath (7, 14) which surrounds the measuring instrument (3) at least partially, being separated therefrom by an annular space, said sheath (7, 14) having one end connected to a means (9, 18) for supplying a gas, which is inert with respect to the measuring instrument (3, 13), in such a way as to be able to make the inert gas circulate against the sheath (7, 14) and the measuring instrument (3, 13) before it is ejected into the hot and/or corrosive atmosphere, this device being **characterised in that** :
- the sheath (7, 14) has a free end which opens into the hot and/or corrosive atmosphere in which measurement is effected,
- the inert gas is evacuated via this free end.

6. A device according to either one of claims 4 and 5, characterised in that the sheath (7) is itself covered with a thermally insulating material (10), such as ceramic or rock wool fibres.

7. A device according to either one of claims 5 and 6, characterised in that the measuring instrument (3) projects beyond the end of the sheath (7, 14) via which the inert gas is ejected into the atmosphere in which measurement is effected.

8. A device according to any one of claims 5 to 7, characterised in that the annular space separating the inner surface of the sheath (7, 14) from the measuring instrument (3, 13) is of the order of 1 mm.

9. A device according to any one of claims 5 to 8, characterised in that the measuring instrument (3, 13) is a temperature measuring instrument.

10. A device according to claim 9, characterised in that the measuring instrument (3, 13) is a thermocouple.

11. Use of a device according to claim 9 when the latter is dependent on claim 7, for measuring the skin temperature of a tube (2) surrounded by the hot and/or corrosive atmosphere.

12. Use according to claim 11, in which a sleeve (11), of the same composition as the sheath (7), is held in position on the tube (2) by a collar (12), one part of the casing of the measuring instrument (3) being applied against the tube (2) and covered by a portion of the sleeve (11).

13. Use of a device according to claim 11 or claim 12, in which the end of the sheath (7) via which the inert gas is ejected into the hot and/or corrosive atmosphere is arranged in the immediate vicinity of the tube (2).

14. Use of a device according to claim 9 or claim 10, when the latter are dependent on claim 7, for measuring the temperatures of the combustion gases from a furnace, in which the sheath (14) projects into the furnace from a wall (15) thereof and the measuring instrument (13) itself projects into the passage of the combustion gases beyond the end of the sheath (14) via which the inert gas is ejected into the furnace.
